# EUROPÄISCHE PATENTSCHRIFT

(11) **EP 0 902 887 B1**
(45) Veröffentlichungstag und Bekanntmachung des Hinweises auf die Patenterteilung: **03.01.2001**
(21) Anmeldenummer: 97924922.4
(22) Anmeldetag: 24.05.1997
(51) Int. Cl.: G01N 13/02

(54) **VORRICHTUNG ZUR DYNAMISCHEN MESSUNG DER OBERFLÄCHENSPANNUNG EINER FLÜSSIGKEIT**
DEVICE FOR DYNAMIC MEASUREMENT OF THE SURFACE TENSION OF A LIQUID
DISPOSITIF DE MESURE DYNAMIQUE DE LA TENSION SUPERFICIELLE D'UN LIQUIDE

(30) Priorität: 31.05.1996 DE 29609646 U
(43) Veröffentlichungstag der Anmeldung: 24.03.1999
(73) Patentinhaber: Sita Messtechnik GmbH, 01217 Dresden (DE)
(72) Erfinder: SCHULZE, Lothar, D-01139 Dresden (DE)
(74) Vertreter: Ilberg, Roland W., Dipl.-Ing.
(86) Internationale Anmeldenummer: DE9701085
(87) Internationale Veröffentlichungsnummer: WO9746863

(56) Entgegenhaltungen:
- WO-A-96/18877
- DE-A- 2 915 956
- DE-A- 4 303 133
- DE-U- 29 609 646
- US-A- 3 765 227
- US-A- 4 527 421

## Beschreibung

### Technisches Gebiet

Die vorliegende Erfindung bezieht sich auf eine Vorrichtung zur dynamischen Messung der Oberflächenspannung an Grenzflächen zwischen Flüssigkeiten und Gasen nach der Methode der Auswertung des maximalen Blasendrucks.

### Stand der Technik

Eine derartige Vorrichtung und ein Meßverfahren hierzu ist beispielsweise näher beschrieben in der EP 0 149 500 A2.

Zur Theorie und zum weiteren Verständnis der Meßmethode wird auf die Firmendruckschrift: Blasendrucktensiometer BP2, Benutzerhandbuch, Krüss GmbH, Hamburg 1995, verwiesen.

Die genannten Vorrichtungen eignen sich zur labormäßigen, stationären Untersuchung von Flüssigkeiten. An die Meßbedingungen werden höchste Anforderungen gestellt. So muß beispielsweise der Füllstand bzw. die Eintauchtiefe der Kapillare in die Meßflüssigkeit millimetergenau anhand einer Absenkvorrichtung eingestellt werden, wobei zuvor manuell und sehr vorsichtig eine Höhenjustierung bis zum "Anspringen" der Flüssigkeit an die Kapillare vorgenommen werden muß. Der Aufstellort ist sehr sorgfältig auszuwählen, da beispielsweise Vibrationen durch vorbeilaufendes Personal oder durch Zugluft für eine gravierende Verfälschung der Meßergebnisse sorgen. Auch ist das Meßgerät sorgfältig auszurichten. Aufgrund des aufwendigen Meßplatzaufbaus und des hohen Gewichts von ca 20 kg verbietet sich eine mobile Anwendung. Ein weiterer Grund für den stationären Meßplatzaufbau ist darin begründet, daß für die Blasenerzeugung relativ hohe Drücke notwendig sind, wofür wiederum große, externe Druckgaserzeuger bereitzustellen sind und selbstverständlich muß ein Elektro-Netzanschluß für die Stromversorgung vorhanden sein. Die Regelung der Blasenbildung bzw. Blasenfrequenz erfolgt aufwendig über Analogventile. Die Auswertung kann nur an einem Personalcomputer erfolgen.

Weiterhin sind Vorrichtungen bekannt, die zwecks kontinuierlicher Messungen ständig mit einer bestimmten zu untersuchenden Flüssigkeit in Verbindung stehen (DE 41 12 417 A1, DE 43 03 133 A1), wobei der apparative Aufwand mindestens ebenso hoch ist. Es werden externe Drucklufterzeuger, zwei Druckluftschläuche, zwei Ventile und zwei unterschiedliche, mit eakt in die gleiche Tiefe eintauchende Präzisionskapillaren zur Erzeugung der Gasblasen benötigt, sowie ein Druckdifferenzmesser an den Zuführungen zu den Kapillaren. Die Auswertung erfolgt an einem Personalcomputer. Störungen, verursacht durch einen Blasenabriß an einer der Kapillaren, erschweren eine Auswertung.

In allen bekannten Vorrichtungen wird der Druck bzw. die Druckdifferenz zwischen zwei Kapillaren als Absolutwert gemessen, wozu relativ kostenintensive Drucksensoren mit einer sehr genauen Kalibrierung erforderlich sind.

Letztlich ist aus der DE 44 23 720 C1 noch eine gattungsfremde Vorrichtung zur Messung der Oberflächenspannung von vorzugsweise Metallschmelzen mit einer Kapillare zur Gaszufuhr bekannt, die z.B. senkrecht durch den Boden eines die Metallschmelze aufnehmenden Tiegels geführt ist und in einer Düse für die Ausbildung von Gasblasen ausläuft. Bei Kenntnis der Oberflächenspannung von Gußeisen kann mit dieser Vorrichtung auf die Graphitmorphologie des im Gußeisen enthaltenen Kohlenstoffs geschlossen werden, es kann der Schwefelgehalt des Roheisens oder auch die Veredelungsbehandlung von Aluminiumsilicium-Legierungen beurteilt werden. Es handelt sich dabei um eine sehr aufwendige, stationär zu betreibende Apparatur, bei der die Frequenz der aus der Düse in die Gußeisenschmelze austretenden Gasblasen bestimmt wird. Die relativ lange Kapillare mit einem Innendurchmesser von nur 0,7 bis 1,5 mm verursacht einen beachtlichen Strömungswiderstand für das Gas und erfordert damit einen hohen Energieaufwand während des Meßvorgangs. Außerdem ändern sich während des Betriebes durch die in die Kapillare mehr oder weniger eindringende Meßschmelze die Benetzungseigenschaften und der Innendurchmesser der Kapillare und damit ändern sich auch die Meßparameter unkontrollierbar, was letztlich zu ungewissen Meßergebnissen führt. Nach jeder Messung ist zudem eine sorgfältige Reinigung der Kapillare oder besser deren Austausch notwendig. Beides ist zeit- und kostenaufwendig.

### Darstellung der Erfindung

Aufgabe der Erfindung ist es, eine kompakte Vorrichtung für einen nahezu universellen, einfachen, sicheren und wartungsarmen Gebrauch zu schaffen. Die Vorrichtung soll gute Meßgenauigkeiten auch bei relativ großen Füllstandstoleranzen der Flüssigkeit im Behälter ermöglichen, eine geringe Leistungsaufnahme, ein geringes Gewicht und stark verminderten Herstellungskosten besitzen. Der Einsatz soll insbesondere mobil erfolgen können, wodurch das ständige Einsenden von Proben in ein Labor ebenso entfällt wie eine an eine Anlage gefesselte Apparatur. Es sollen weiterhin auch kleinste Flüssigkeitsmengen ausgemessen werden können.

Die Aufgabe wird durch die kennzeichnenden Merkmale des 1. Anspruchs gelöst. Vorteilhafte Weiterentwicklungen sind in den Unteransprüchen angegeben.

Mit dem erfindungsgemäßen Gerät wird der Industrie eine kleine, leichte, elektronetz- und druckluftunabhängige, kurzum mobile Meßvorrichtung in die Hand gegeben, die relativ robust und einfach zu bedienen ist, aber dennoch gute Meßergebnisse bei geringen Anschaffungskosten und universeller Anwendbarkeit liefert. Das Meßgerät ist über eine Eingabetastatur zu bedienen und besitzt verschiedene Betriebsmodi. In einem Anzeigedisplay können der gewählte Modus und die Meßergebnisse bzw. auch Fehlermeldungen abgelesen werden. Eine interne Volumenstromquelle erzeugt den notwendigen Gasdruck, mit einem internen Drucksensor wird die Qualität der Gasblasen gemessen und mittels eines Mikroprozessors erfolgt die Auswertung. Eine interne Stromversorgung versorgt alle Verbraucher wahlweise netzunabhängig. Sie besteht aus einem 125/230V-Netzteils und/oder einem wiederaufladbaren bzw. Einweg-Akkumulator.

Als Volumenstromquelle wird vorteilhafterweise eine steuerbare Kleinspannungs-Membranpumpe verwendet, die in der Lage ist, einen hinreichend konstanten Gasdruck aufzubauen. Der benötigte Gasdruck beträgt bei Verwendung der erfindungsgemäßen Düse ca. nur 1/10 des Drucks handelsüblicher Vorrichtungen.

Für den Drucksensor wird nach einer besonders bevorzugten Ausführung ein Schalldruckwandler, namentlich ein Kleinstmikrophon, verwendet. Dieses ist kostengünstig und liefert am Ausgang die erste Ableitung des gemessenen maximalen Blasendrucks, also ein von der Eintauchtiefe der Düse unabhängiges Meßsignal.

Das Meßgerät besitzt vier wählbare Betriebsmodi, nämlich einem Kalibriermodus, einem Meßmodus 1 zur Oberflächenspannungsmessung bei fest gewählter Blasenfrequenz, einem Meßmodus 2 zur Oberflächenspannungsmessung bei automatischem Blasenfrequenzdurchlauf und einem Reinigungsmodus, sowie einen zusätzlichen Fehlermodus.

Im Sensorkopf ist nach einer vorteilhaften Ausführung eine zur Flüssigkeitsoberfläche gerichtete Düse eingebaut, deren Düsenlänge im Verhältnis zur Düsenöffnung sehr kurz ist. Dadurch wird ein ungestörter Blasenabriß in Richtung der Auftriebskraft der Blasen erzeugt, was zur Erhöhung der Meßgenauigkeit beiträgt. Außerdem erleichtert die Düsenform eine Reinigung erheblich und der benötigte Gasdruck für die Erzeugung von Gasblasen in der Meßflüssigkeit sinkt um eine Zehnerpotenz, was insbesondere für ein batteriebetriebenes Handmeßgerät von Bedeutung ist.

Selbstverständlich kann im Sensorkopf (1) anstelle der Meßdüse auch eine Kapillare zur Erzeugung der Gasblasen angeordnet sein.

Da die Oberflächenspannung mit steigender Temperatur kleiner wird, ist in weiterer Ausgestaltung der Erfindung für die Auswertung der Meßergebnisse im Sensorkopf zusätzlich ein Temperaturfühler vorgesehen.

Zusätzlich kann auch ein Leitfähigkeitssensor im Bereich der Meßflüssigkeit im Sensorkopf angeordnet sein, um gleichzeitig mit der Messung der Oberflächenspannung die Leitfähigkeit der Meßflüssigkeit zu messen.

Ein Füllstandssensor im Sensorkopf ist mindestens dann unumgänglich, wenn ein statischer Drucksensor eingesetzt wird.

Für besonders exakte Messungen ist es vorteilhaft, den Sensorkopf (1) erfindungsgemäß in einer Halterung zu befestigen.

### Kurze Beschreibung der Zeichnungen

Die Erfindung soll anhand eines Ausführungsbeispiels näher beschrieben werden. In der zugehörigen Zeichnung zeigen:

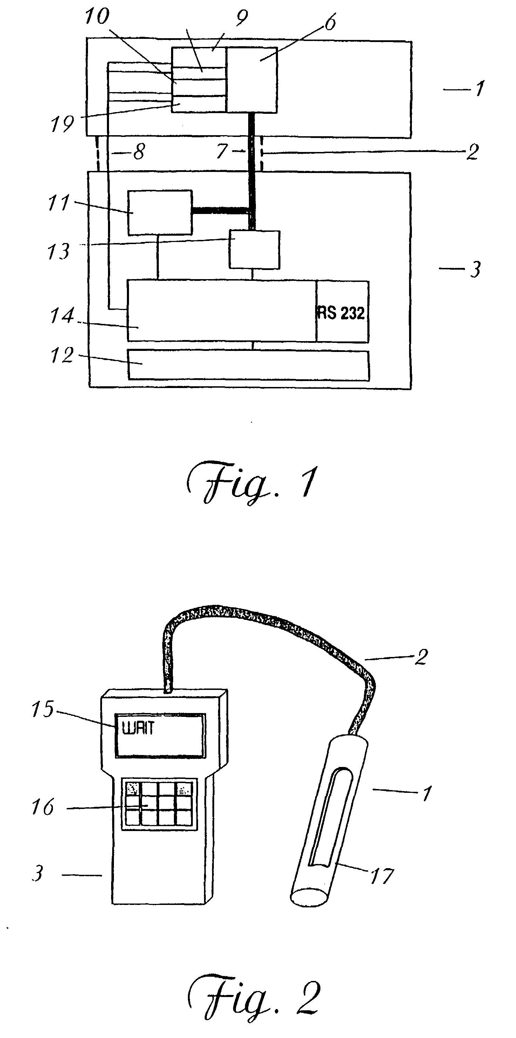

- Fig. 1: die Funktionsstruktur eines Handmeßgerätes,
- Fig. 2: eine konstruktive Ausführung des Gesamtgerätes,

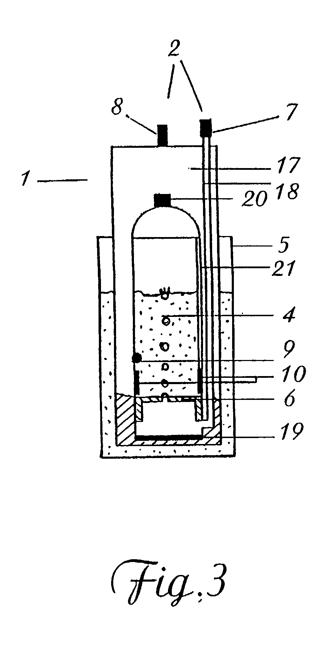

- Fig. 3: den Aufbau eines Sensorkopfes nach der Erfindung.

Ein Sensorkopf 1 ist über eine flexible Zuleitung 2 mit einem Handmeßgerät 3 verbunden. Im noch näher zu beschreibenden Sensorkopf 1, in welchen eine Meßflüssigkeit 4 beim Eintauchen des Sensorkopfes 1 in ein Meßgefäß 5 strömen kann, befindet sich eine Düse 6, durch die Blasen über die Zuleitung 2 in die Meßflüssigkeit 4 gedrückt werden können. Die Zuleitung 2 besteht aus einem flexiblen Schlauch 7 und gegebenenfalls aus stromleitenden, isolierten Litzen 8 für die Versorgung von zusätzlichen Sensoren 9, 10, 19, 20, 21.

Im Gehäuse des Handmeßgerätes 3 ist als Volumenstromquelle 11 eine gleichmäßig arbeitende, steuerbare Membranpumpe mit einer Leistungsaufnahme kleiner 5 Watt untergebracht. Die Membranpumpe ist mit einer Stromversorgung 12, einem 115/230V-Netzteil und/oder einem Akkumulator bzw. einer Batterie verbunden. Über ein T-Stück im Schlauch 7 gelangt der durch die Membranpumpe aufgebauten Luftdruck an einen Drucksensor 13, vorteilhafterweise einen Schalldruckwandler, sowie an die Düse 6, wo sich eine Blase entwickelt. Der Schalldruckwandler wandelt den statischen Druckanteil des Blasendrucks in ein nach der Zeit differenziertes Meßsignal um, womit die Messung unabhängig vom Füllstand im Meßgefäß wird, bzw. unabhängig von der Eintauchtiefe des Sensorkopfes 1 in die Meßlösung 4 wird, was eine wesentliche Voraussetzung für ein unkompliziert zu bedienendes Handmeßgerät 3 ist. Auch ist ein Schalldruckwandler bedeutend kostengünstiger als ein herkömmlich eingesetzter, aufwendig zu kalibrierender Drucksensor. Durch Integration über die Zeit kann in einem Mikroprozessor 14 der Blasendruck und daraus die Oberflächenspannung der Flüssigkeit 4 leicht ermittelt werden. Außerdem können die Meßgrößen: Blasenfrequenz, Temperatur und ggf. Leitfähigkeit der Meßflüssigkeit 4 auf einem LCD-Display 15 des Handmeßgerätes 3 angezeigt und einschließlich Datum und Uhrzeit der Messung im Mikroprozessor 14 gespeichert werden. Über eine Rechnerschnittstelle, z.B. RS 232, ist eine Übergabe, Darstellung und Weiterverarbeitung sämtlicher Meßwerte an einem externen Personalcomputer optional möglich. Die Bedienung des Handmeßgerätes 3 erfolgt über eine Eingabetastatur 16.

Der Sensorkopf 1 hat ein Sensorgehäuse 17, in dessen unteren Bereich die Düse 6 angeordnet ist. Die Düse 6 besitzt eine im Verhältnis zur Düsenöffnung sehr kleine Länge, wodurch die störende Wirkung grenzflächenspannungsabhängiger Kapillarkräfte, wie sie bei Meßkapillaren auftreten, ohne wesentlichen Einfluß bleiben. Auch ist hierdurch eine Reinigung der Düse 6 sehr erleichtert und der notwendige Gasdruck bedeutend verringerbar.

Die Düse 6 ist zur Oberfläche der Meßflüssigkeit 4 gerichtet, so daß die Abrißrichtung der natürlichen Auftriebsrichtung der Gasblasen entspricht, wodurch Meßfehler verringert werden. Zur Gaszuführung dient ein das Sensorgehäuse 17 durchsetzender Kanal 18 mit einer Mündung unterhalb der Düse 6.

Weiterhin ist im Bereich der Benetzung durch die Meßflüssigkeit 4 ein Temperatursensor 9 angeordnet und über eine in der Zuleitung 2 geführte Litze 8 mit dem Mikroprozessor 14 im Handmeßgerät 3 verbunden. Die Erfassung der Temperatur und ggf. eine Temperaturkompensation sind aus Gründen der im wesentlichen linearen Temperaturabhängigkeit der Oberflächenspannung wichtig, weil mit dem Handmeßgerät 3 Meßflüssigkeiten 4 zwischen 10°C und 90°C zu diagnostizieren sein sollen.

Am Boden des Sensorgehäuses 17, noch unterhalb der Einmündung des Kanals 18, ist vorteilhafterweise ein keramischer Feuchte- oder Leitfähigkeitssensor 19 angeordnet. Im Raum zwischen diesem Sensor 19 und der Düsenöffnung steht normalerweise keine Meßflüssigkeit 4. Der Sensor 19 überwacht, ob etwa Meßflüssigkeit 4 in die Düse 6 eingedrungen ist und gibt gegebenenfalls ein Signal an den Mikroprozessor 14.

Weiterhin kann sich oberhalb der Düse 6 ein vorzugsweise kapazitiver Leitfähigkeitssensor 10 befinden, dessen Elektroden an der Innenwandung des Sensorgehäuses 17 befestigt sind. An die Elektroden wird in bekannter Weise eine Wechselspannung gelegt. Der aus den Elektroden und der dazwischen befindlichen Meßflüssigkeit 4 bestehende Kondensator liefert eine elektrische Impedanz, aus der Meßwerte bezüglich der Konzentration von z.B. Reinigungsmitteln in der Meßflüssigkeit 4 ermittelt werden können. Damit wird die Möglichkeit geschaffen, sowohl die Oberflächenspannung als auch die Leitfähigkeit der Meßflüssigkeit 4 gleichzeitig zu bestimmen.

Letztlich können noch Füllstandssensoren 20, 21 im Sensorgehäuse 17 untergebracht sein, die den Stand der Meßflüssigkeit 4 im Sensorkopf 1 signalisieren. Obwohl die Messung weitgehend unabhängig vom Flüssigkeitsniveau ist, muß natürlich genügend Flüssigkeit 4 zum Ausbilden eines homogenen Blasenstroms vorhanden sein.

### Kurze Beschreibung der Meßmethode

Das Handmeßgerät besitzt vier Betriebsmodi und einen Fehlermodus, die mit der Tastatur 16 wählbar sind.

### 1. Kalibriermodus:

Im Kalibriermodus erfolgt zunächst ein Systemcheck und die Kalibrierung des Handmeßgerätes 3 auf die Oberflächenspannung einer bekannten Flüssigkeit, z.B. Wasser oder Alkohol.

### 2. Meßmodus 1:

Im Meßmodus 1 erfolgt die Oberflächenspannungsmessung mit Festfrequenzen des Blasenaustritts, wählbar sind vorzugsweise Blasenfrequenzen von 1Hz bis 10Hz. Größere Frequenzbereiche sind jedoch auch möglich.

### 3. Meßmodus 2:

Im Meßmodus 2 erfolgt die Oberflächenspannungsmessung bei automatischem Frequenzdurchlauf des Blasenaustritts von 1Hz nach 10Hz. Größere Frequenzbereiche sind auch möglich.

### 4. Reinigungsmodus:

Es erfolgt eine Reinigung der Düse 6 mit voller Volumenstromleistung der Volumenstromquelle 11.

### 5. Fehlermodus:

Das Handmeßgerät 3 erkennt automatisch auftretende Fehler in der Bedienung und Handhabung sowie während des Messens, so daß Fehlmessungen weitestgehend ausgeschlossen sind. Über das LCD-Display 15 werden die Fehler angezeigt. So wird in die Düse 6 eindringende Meßflüssigkeit 4 registriert und angezeigt. Weiterhin ist das Ausschalten des Handmeßgerätes 3 über eine OFF-Taste erst möglich, wenn der Sensorkopf 1 aus der Meßflüssigkeit 4 genommen wurde. Hierdurch wird praktisch verhindert, daß Meßflüssigkeit 4 in die Düse 6 gelangt. Ferner werden das Über- oder Unterschreiten des Meßbereichs der Oberflächenspannung, der vorzugsweise zwischen 15 und 80 mN/m liegt, der Temperatur der Meßflüssigkeit 4 zwischen 0 und 100 °C, sowie der Umgebungstemperatur angezeigt.

### Gewerbliche Anwendbarkeit

Ein Anwendungsfeld ist z.B. die Diagnose tensidhaltiger Waschlaugen oder Spülwässer, ein anderes die Qualitätssicherung von tensidhaltigen Tinten, Farben, Reinigungsmitteln oder Wischwässer. Unter anderem lassen sich mit der erfindungsgemäßen Vorrichtung auch sehr gut pestizide, photochemische und pharmazeutische Lösungen diagnostizieren. Weitere Anwendungsgebiete erschließen sich in der Halbleiterindustrie, Metallverarbeitung und Textilindustrie.

### Bezugszeichen

- Sensorkopf: 1
- Zuleitung: 2
- Handmeßgerät: 3
- Meßflüssigkeit: 4
- Meßgefäß: 5
- Düse: 6
- Schlauch: 7
- Litzen: 8
- Temperatursensor: 9
- Leitfähigkeitssensor: 10
- Volumenstromquelle: 11
- Stromversorgung: 12
- Drucksensor: 13
- Mikroprozessor: 14
- Display: 15
- Eingabetastatur: 16
- Sensorgehäuse: 17
- Kanal: 18
- Feuchte-/Leitfähigkeitssensor: 19
- Füllstandssensoren: 20, 21

## Patentansprüche

1. Vorrichtung zur dynamischen Messung der Oberflächenspannung einer Flüssigkeit nach dem Blasendruckverfahren, **dadurch gekennzeichnet**, daß die Vorrichtung als mobiles Meßgerät (3) nach Art eines Handmeßgerätes ausgeführt ist, welches über eine flexible, mindestens Druckgas führende Zuleitung (2) mit einem Sensorkopf (1) verbunden ist, welcher in der Meßflüssigkeit (4) Gasblasen abgibt.

2. Vorrichtung nach Anspruch 1, **dadurch gekennzeichnet**, daß das Meßgerät (3) eine Eingabetastatur (16) für die Bedienung in verschiedenen Betriebsmodi, ein Anzeigedisplay (15) zur Überwachung der Betriebsmodi und Anzeige der Meßergebnisse, eine Volumenstromquelle (11) zur Erzeugung des Gasdrucks, einen Drucksensor (13) zur Erfassung der Qualität der Gasblasen, einen Mikroprozessor (14) zur Steuerung und Verarbeitung der Messungen und eine interne Stromversorgung (12) für sämtliche Stromverbraucher enthält.

3. Vorrichtung nach Anspruch 2, **dadurch gekennzeichnet**, daß die Volumenstromquelle (11) als steuerbare Kleinspannungs-Membranpumpe ausgeführt ist.

4. Vorrichtung nach Anspruch 2, **dadurch gekennzeichnet**, daß der Drucksensor (13) als Schalldruckwandler ausgeführt ist.

5. Vorrichtung nach Anspruch 2, **dadurch gekennzeichnet**, daß die interne Stromversorgung (12) mittels eines eingebauten oder externen 125/230V-Netzteils erfolgt.

6. Vorrichtung nach Anspruch 2, **dadurch gekennzeichnet**, daß die interne Stromversorgung (12) mittels einer Wegwerf-Batterie oder eines wiederaufladbaren Akkumulators erfolgt.

7. Vorrichtung nach Anspruch 2, **gekennzeichnet durch** vier wählbare Betriebsmodi, nämlich einen Kalibriermodus, einen Meßmodus 1 zur Oberflächenspannungsmessung bei fest gewählter Blasenfrequenz, einen Meßmodus 2 zur Oberflächenspannungsmessung bei automatischem Blasenfrequenzdurchlauf und einen Reinigungsmodus.

8. Vorrichtung nach einem der vorhergehenden Ansprüche, dadurch gekennzeichnet, daß der Sensorkopf (1) eine Kapillare zur Erzeugung der Gasblasen enthält.

9. Vorrichtung nach einem der Ansprüche 1 bis 7, gekennzeichnet durch eine zur Flüssigkeitsoberfläche gerichteten Düse (6), deren Länge im Verhältnis zur Düsenöffnung kurz ist.

10. Vorrichtung nach Anspruch 9 , **dadurch gekennzeichnet**, daß zusätzlich ein Feuchtesensor (19) oder Leitfähigkeitssensor unterhalb der Düse (6) im Sensorkopf (1) angeordnet ist.

11. Vorrichtung nach einem der vorhergehenden Ansprüche, **dadurch gekennzeichnet**, daß zusätzlich ein Temperatursensor (9) im Bereich der Meßflüssigkeit (4) im Sensorkopf (1) angeordnet ist.

12. Vorrichtung nach einem der vorhergehenden Ansprüche, **dadurch gekennzeichnet**, daß zusätzlich ein Leitfähigkeitssensor (10) im Bereich der Meßflüssigkeit (4) im Sensorkopf (1) angeordnet ist.

13. Vorrichtung nach einem der vorhergehenden Ansprüche, **dadurch gekennzeichnet**, daß mindestens ein Füllstandssensor (20, 21) im Sensorkopf (1) angeordnet ist.

14. Vorrichtung nach einem der vorhergehenden Ansprüche, dadurch gekennzeichnet, daß der Sensorkopf (1) in einer Halterung befestigt ist.

## Claims

1. Device for the dynamic measurement of the surface tension of a liquid according to the bubble pressure process **characterised in that** the device is in the form of a mobile measuring device (3) which is hand-held and which via a flexible supply line (2) carrying at least pressurised gas is connected to a sensor head (1) which gives off gas pockets in the measuring liquid (4).

2. Device according to Claim 1 **characterised in that** the measuring device (3) has an input key-pad (16) for service in different operating modes, a display (15) for monitoring the different operating modes and display of the measurement results, a volume current source (11) for generating the gas pressure, a pressure sensor (13) for recording the quality of the gas pockets, a microprocessor (14) for controlling and processing the measurements and an internal current supply (12) for all current consumers.

3. Device according to Claim 2 **characterised in that** the volume current source (11) is in the form of a controllable low voltage membrane pump.

4. Device according to Claim 2 **characterised in that** the pressure sensor (13) is in the form of an acoustic pressure transformer.

5. Device according to Claim 2 **characterised in that** the internal power supply (12) is effected by means of a built-in or external 125/230V power pack.

6. Device according to Claim 2 **characterised in that** the internal power supply (12) is effected by means of a disposable battery or a rechargeable accumulator.

7. Device according to Claim 2 **characterised by** four selectable operating modes, namely a calibration mode, a measuring mode 1 for surface tension measurement with fixed, selected bubble frequency, a measuring mode 2 for surface tension measurement with automatic bubble frequency flow and a purification mode.

8. Device according to one of the preceding claims **characterised in that** the sensor head (1) contains a capillary for the generation of gas pockets.

9. Device according to one of the Claims 1 to 7 **characterised by** a nozzle (6) oriented to the surface of the liquid, whereby the length of the nozzle is short in relation to the nozzle opening.

10. Device according to Claim 9 **characterised in that** there is additionally a humidity sensor (19) or conductivity sensor positioned below the nozzle (6) in the sensor head (1).

11. Device according to one of the preceding claims **characterised in that** there is additionally a temperature sensor (9) in the region of the measurement liquid (4) in the sensor head (1).

12. Device according to one of the preceding claims **characterised in that** there is additionally a conductivity sensor (10) in the region of the measurement liquid (4) in the sensor head (1).

13. Device according to one of the preceding claims **characterised in that** there is at least one level sensor (20, 21) in the sensor head (1).

14. Device according to one of the preceding claims **characterised in that** the sensor head (1) is secured in a mount.

## Revendications

1. Dispositif de mesure dynamique de la tension superficielle d'un liquide selon le procédé de la pression de bullage,
caractérisé en ce que
le dispositif est réalisé sous la forme d'un appareil de mesure mobile (3) tel qu'un appareil de mesure portable, relié par un tuyau d'alimentation (2) souple, fournissant au moins du gaz sous pression, à une tête de capteur (1) introduisant des bulles de gaz dans le liquide de mesure (4).

2. Dispositif selon la revendication 1,
caractérisé en ce que
l'appareil de mesure (3) comporte un clavier d'entrée (16) pour fonctionner dans différents modes de fonctionnement, un afficheur (15) pour surveiller les modes de fonctionnement et afficher les résultats de mesure, une source de débit volumique (11) générant la pression de gaz, un capteur de pression (13) pour saisir la qualité des bulles de gaz, un microprocesseur (14) pour commander et traiter les mesures et une alimentation de courant interne (12) pour tous les utilisateurs.

3. Dispositif selon la revendication 2,
caractérisé en ce que
la source de débit volumique (11) est une pompe à membrane, commandée, basse tension.

4. Dispositif selon la revendication 2,
caractérisé en ce que
le capteur de pression (13) est un convertisseur de pression phonique.

5. Dispositif selon la revendication 2,
caractérisé en ce que
l'alimentation de courant interne (12) est reliée à une source interne ou à un réseau externe à 125/230V.

6. Dispositif selon la revendication 2,
caractérisé en ce que
l'alimentation électrique interne (12) comprend une pile à usage unique ou un accumulateur rechargeable.

7. Dispositif selon la revendication 2,
caractérisé par
quatre modes de fonctionnement susceptibles d'être sélectionnés, à savoir un mode de calibrage, un premier mode de mesure pour mesurer la tension superficielle pour une fréquence de bulles choisie de manière fixe, un second mode de mesure pour mesurer la tension superficielle avec un balayage automatique de la fréquence des bulles et enfin un mode de nettoyage.

8. Dispositif selon l'une quelconque des revendications 1 à 7,
caractérisé en ce que
la tête de capteur (1) comporte un tube capillaire pour générer des bulles de gaz.

9. Dispositif selon l'une quelconque des revendications 1 à 7,
caractérisé par
une buse (6) dirigée à travers la surface superficielle du liquide et dont la longueur est courte par rapport à son orifice.

10. Dispositif selon la revendication 9,
caractérisé par
en supplément un capteur d'humidité (19) ou un capteur de conductivité prévu en dessous de la buse (6) dans la tête de capteur (1).

11. Dispositif selon l'une quelconque des revendications précédentes,
caractérisé par
en outre un capteur de température (9) prévu au niveau du liquide à mesurer (4) dans la tête de capteur (1).

12. Dispositif selon l'une quelconque des revendications précédentes,
caractérisé par
en plus un capteur de conductivité (10) au niveau du liquide de mesure (4) dans la tête de capteur (1).

13. Dispositif selon l'une quelconque des revendications précédentes,
caractérisé par
au moins un capteur de niveau de remplissage (20, 21) prévu dans la tête de capteur (1).

14. Dispositif selon l'une quelconque des revendications précédentes,
caractérisé en ce que
la tête de capteur (1) est fixée dans un support.
